# EUROPÄISCHE PATENTANMELDUNG

(11) **EP 1 477 360 A2**
(43) Veröffentlichungstag der Anmeldung: **17.11.2004**
(21) Anmeldenummer: 04010666.8
(22) Anmeldetag: 03.05.2004
(51) Int. Cl.: B60N 2/68

(54) **Rückenlehne**

(30) Priorität: 13.05.2003 DE 10321277
(71) Anmelder: Bayerische Motoren Werke Aktiengesellschaft, 80809 München (DE)
(72) Erfinder: Müller, Andreas, 84079 Bruckberg (DE); Kuschmann, Ralph, 84028 Landshut (DE)

(57) **Zusammenfassung**

Es ist eine Tragstruktur für ein Polster einer Rückenlehne eines Fahrzeugsitzes bekannt. Die Tragstruktur ist aus einem geeigneten thermoplastischen oder einem duroplastischen Kunststoff hergestellt. Sie besteht aus einer Rückenschale und einem Rahmen aus U-profilartigen, nach außen hin offenen Seitenholmen und einem die oberen Enden der Seitenholme verbindenden, einseitig offenen U-profilartigen Querholm. Der Rahmen umgibt die Rückenschale. Aufgabe der Erfindung ist es, eine besonders leichte Tragstruktur für eine Rückenlehne zu schaffen.

Erfindungsgemäß besteht eine Rückenlehne aus zumindest einem Polster, das an einem Rahmen (**1**) aus einem Kunststoff angebracht ist, der mit zumindest einem, einteilig mit dem Rahmen (**1**) ausgeführten Träger (**2, 3**) versteift ist. Der Rahmen (**1**) und der zumindest eine Träger (**2, 3**) sind mit einem Kunststoffschaum (**10**) umschäumt, der eine Lehnenschale bildet.

## Beschreibung

Die Erfindung betrifft eine Rückenlehne gemäß des Oberbegriffs des Patentanspruchs 1.

Aus der DE 38 41 532 C2 ist eine Tragstruktur für ein Polster einer Rückenlehne eines Fahrzeugsitzes bekannt. Die Tragstruktur ist aus einem geeigneten thermoplastischen oder einem duroplastischen Kunststoff hergestellt. Sie besteht aus einer Rückenschale und einem Rahmen aus U-profilartigen, nach außen hin offenen Seitenholmen und einem die oberen Enden der Seitenholme verbindenden, einseitig offenen U-profilartigen Querholm. Der Rahmen umgibt die Rückenschale. In den offenen Hohlräumen der Seitenholme lassen sich die Anschlusslaschen der Beschläge sowie die Sitzverstellung und gegebenenfalls noch andere Elemente unterbringen. Vorzugsweise sind in den Hohlräumen der Holme angeformte Rippen angeordnet.

Aufgabe der Erfindung ist es, eine besonders leichte Tragstruktur für eine Rückenlehne zu schaffen.

Diese Aufgabe wird durch die Merkmale des Patentanspruchs 1 gelöst. Patentanspruch 8 bezieht sich auf einen Fahrzeugsitz mit einer entsprechenden Rückenlehne. Patentanspruch 9 bezieht sich auf ein Kraftfahrzeug mit zumindest einem solchen Fahrzeugsitz.

Gemäß des Patentanspruchs 1 hat eine Rückenlehne einen Rahmen aus einem Kunststoff, der mit zumindest einem, einteilig mit dem Rahmen ausgeführten Träger versteift ist. Der Rahmen und der zumindest eine Träger sind mit einem Kunststoffschaum umschäumt, wobei der Kunststoffschaum eine Lehnenschale bildet. Die so gebildete Rückenlehne ist außerordentlich leicht, da sowohl ein Rahmen aus Kunststoff gegenüber einem Rahmen aus Metall wesentlich leichter ist, als auch eine Lehnenschale aus einem Kunststoffschaum leichter als eine Lehnenschale aus einem Vollkunststoff ist. Eine verstellbare Rückenlehne ist durch das geringere Gewicht leichter betätigbar. Zudem können einteilig mit dem Rahmen mit dem zumindest einen Träger aus Kunststoff weitere Funktionselemente, wie eine Bezugsbefestigung, eine Kopfstützenaufnahme oder Inserts für Lagerstellen und für ein Schloss, ausgeführt werden. Aus all diesen Vorteilen ergibt sich bei der erfindungsgemäßen Rückenlehne gegenüber bekannten Rückenlehnen eine Kostenersparnis sowohl bei den Material- als auch bei den Montagekosten.

Der Kunststoffschaum versteift den Rahmen mit den Trägern, bildet eine Lehnenschale und dient als Schutz für den Rahmen mit den Trägern. Zudem hat der Kunststoffschaum schallabsorbierende und energieabsorbierende Eigenschaften, die vor allem bei einem Fahrzeugsitz von Vorteil sind.

Bevorzugt ist der Kunststoffschaum ein EPP-Schaum. EPP steht für expandiertes Polypropylen. Dies ist ein häufig eingesetzter Kunststoffschaum, der preiswert herstellbar und gut zu verarbeiten ist.

Zusammen mit dem Kunststoffschaum kann günstigerweise ein Rückwandteppich auf den Rahmen mit dem zumindest einen Träger aufgeschäumt sein. Dies ist eine einfache und preiswerte Möglichkeit, die Rückenlehne hinten mit einer Dekorschicht zu beziehen, sodass der Kunststoffschaum vor Beschädigungen geschützt ist und nicht mehr sichtbar ist.

Wenn ein Fahrzeugsitz eine solche Rückenlehne aufweist, reduziert sich das Gewicht des Fahrzeugsitzes. Dies ist bei den heutigen großen Anstrengungen, möglichst leichte Fahrzeuge zu bauen, von großer Bedeutung. Durch den Kunststoffschaum kann im Crashfall das Beulen, Knicken oder Brechen des Rahmens mit dem zumindest einen Träger verhindert werden. Auch kann eine derartige Rückenlehne in einem Fahrzeug bei einem Unfall von hinten auf die Rückenlehne aufprallendes Ladegut verzögern und zurückhalten.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- **Fig.** 1: eine perspektivische Ansicht eines Rahmens einer Rückenlehne und
- **Fig.** 2: eine perspektivische Ansicht des Rahmens aus **Fig.** 1 umschäumt mit einem Kunststoffschaum.

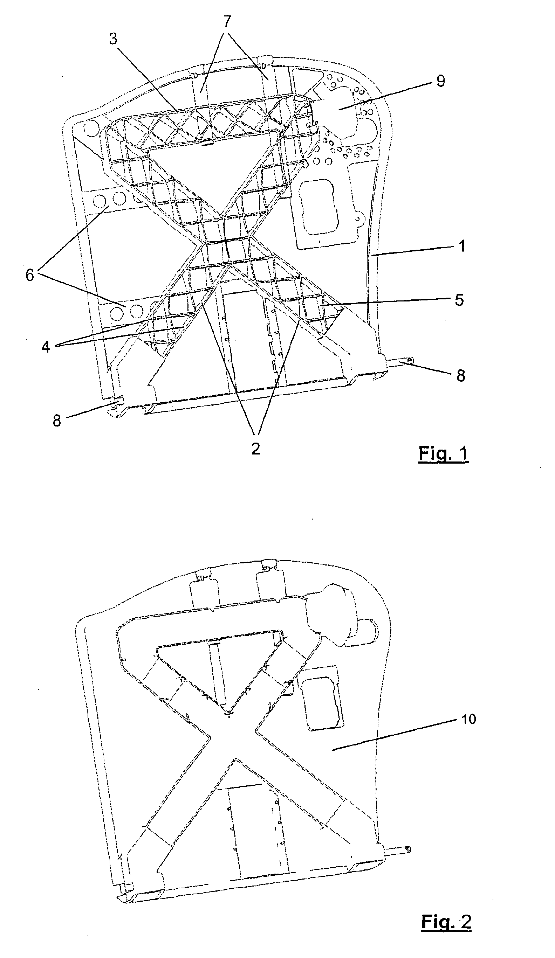

In **Fig.** 1 ist ein geschlossener Rahmen 1 aus Kunststoff einer Rückenlehne dargestellt. Der Rahmen 1 ist mit zwei sich zumindest über große Teile der Rückenlehne erstreckende, diagonal verlaufenden und einander sich kreuzenden Trägern 2 versteift, die einteilig mit dem Rahmen 1 ausgeführt sind. Die beiden oberen Enden der beiden diagonalen Träger 2 sind mit einem weiteren Träger 3 miteinander verbunden, der ebenfalls einteilig mit dem Rahmen 1 ausgeführt ist. Alle drei Träger 2 und 3 bestehen aus zwei zueinander beabstandeten parallelen Stegen 4, die mit zahlreichen Versteifungsrippen 5 miteinander verbunden sind. Zusätzlich sind weitere Versteifungsrippen 6 zwischen dem Rahmen 1 und den Trägern 2 und 3 vorgesehen. Zusammen mit dem Rahmen 1 und mit den Trägern 2 und 3 sind einteilig Funktionselemente 7, 8, 9 angespritzt worden. So sind eine Kopfstützenaufnahme 7, Lagerstellen 8 zum Verschwenken der Rückenlehne und eine Schlossanbindung 9 vorgesehen.

Der gesamte Rahmen 1 mit den Trägern 2 und 3, den Versteifungsrippen 6 und den Funktionselementen 7, 8 und 9 ist mit einem EPP-Kunststoffschaum 10 umschäumt, wie es in **Fig.** 2 dargestellt ist. Der Kunststoffschaum 10 schützt den darin eingebetteten Rahmen 1, sodass ein Beulen, Knicken oder Brechen bei hohen Beanspruchungen verhindert wird. Auf der Rückseite ist ein hier nicht dargestellter Rückwandteppich mit dem EPP-Kunststoffschaum 10 aufgeschäumt. Der Rückwandteppich bildet die sichtbare Rückseite der Rückenlehne. Er deckt den optisch weniger ansprechenden EPP-Kunststoffschaum 10 ab, und schützt ihn vor Beschädigungen.

Dies ist insbesondere bei Fahrzeugsitzen von Vorteil, da bei einem Unfall sehr hohe Beanspruchungen auf eine Rückenlehne des Fahrzeugsitzes wirken können. Bei dem Fahrzeug handelt es sich bevorzugt um ein Kraftfahrzeug. Seit einigen Jahren werden bei Kraftfahrzeugen große Anstrengungen unternommen, um das Gewicht zu reduzieren. Ein geringeres Gewicht führt zu einem geringeren Kraftstoffverbrauch und zu einer höheren Fahrdynamik des Kraftfahrzeugs. Der Einsatz von zumindest einem Fahrzeugsitz mit einer erfindungsgemäßen Rückenlehne kann dabei einen Beitrag zur Gewichtsreduzierung des Kraftfahrzeugs leisten.

Bei einem Kraftfahrzeug spielen auch die energieabsorbiere'nden Eigenschaften des EPP-Kunststoffschaums 10 eine maßgebende Rolle. So kann die erfindungsgemäße Rückenlehne aufprallende Gegenstände auffangen, ohne dass der eigentliche Rahmen 1 mit den Trägern 2 und 3 erheblich beschädigt wird. Zudem tragen die schallabsorbierenden Eigenschaften eines Kunststoffschaums dazu bei, die Geräusche im Innenraum eines Kraftfahrzeugs zu senken.

## Patentansprüche

1. Rückenlehne mit einem Rahmen aus einem Kunststoff, der mit zumindest einem, einteilig mit dem Rahmen ausgeführten Träger versteift ist, **dadurch gekennzeichnet, dass** der Rahmen (**1**) und der zumindest eine Träger (**2, 3**) mit einem Kunststoffschaum (**10**) umschäumt sind, wobei der Kunststoffschaum (**10**) eine Lehnenschale bildet.

2. Rückenlehne nach Anspruch 1, **dadurch gekennzeichnet, dass** der Rahmen (**1**) zumindest durch zwei sich zumindest über große Teile der Rückenlehne erstreckende, diagonal verlaufende und einander sich kreuzende Träger (**2**) versteift ist.

3. Rückenlehne nach Anspruch 2, **dadurch gekennzeichnet, dass** die beiden oberen Enden der beiden diagonalen Träger (**2**) über einen weiteren Träger (**3**) miteinander verbunden sind.

4. Rückenlehne nach einem der vorhergehenden Ansprüche, **dadurch gekennzeichnet, dass** die Träger (**2, 3**) und / oder der Rahmen (**1**) mit den Trägern (**2**, **3**) Versteifungsrippen (**5, 6**) aufweisen.

5. Rückenlehne nach einem der vorhergehenden Ansprüche, **dadurch gekennzeichnet, dass** der Kunststoffschaum (**10**) ein EPP-Schaum ist.

6. Rückenlehne nach einem der vorhergehenden Ansprüche, **dadurch gekennzeichnet, dass** zusammen mit dem Kunststoffschaum (**10**) ein Rückwandteppich auf den Rahmen (**1**) mit den Trägern (**2, 3**) aufgeschäumt ist.

7. Rückenlehne nach einem der vorhergehenden Ansprüche, **dadurch gekennzeichnet, dass** an dem Rahmen (**1**) mit den Trägern (**2, 3**) Funktionselemente (**7, 8, 9**) einteilig angebracht sind.

8. Fahrzeugsitz mit einer Rückenlehne gemäß einer der vorhergehenden Ansprüche.

9. Kraftfahrzeug mit zumindest einem Fahrzeugsitz gemäß Anspruch 8.
